# FASCICULE DE BREVET EUROPEEN

(11) **EP 3 917 184 B1**
(45) Date de publication et mention de la délivrance du brevet: **06.09.2023**
(21) Numéro de dépôt: 21174445.3
(22) Date de dépôt: 18.05.2021
(51) Int. Cl.: H04W 8/20, H04L 9/40, H04W 8/18, H04W 12/069

(54) **PROCÉDÉ ET DISPOSITIFS DE GESTION DE PROFILS DE COMMUNICATION**
VERFAHREN UND VORRICHTUNGEN ZUR VERWALTUNG VON KOMMUNIKATIONSPROFILEN
METHOD AND DEVICES FOR MANAGEMENT OF COMMUNICATION PROFILES

(30) Priorité: 28.05.2020 FR 2005657
(43) Date de publication de la demande: 01.12.2021
(73) Titulaire: IDEMIA France, 92400 Courbevoie (FR)
(72) Inventeur: KARPINSKI, Pawel, 92400 COURBEVOIE (FR); MACUDA, Jacek, 92400 Courbevoie (FR); WOZNIAK, Tomasz, 92400 Courbevoie (FR)
(74) Mandataire: Idemia

(56) Documents cités:
- EP-A1- 3 029 968
- FR-A1- 3 059 194

## Description

### Technique antérieure

La présente invention se situe dans le domaine de la gestion des profils de télécommunication.

De façon connue, les profils de télécommunication utilisés par un terminal sont fournis par un opérateur et mémorisés dans un élément sécurisé (carte SIM, entité eSIM, eUICC) de ce terminal.

Le standard GSMA (GSM Association) définit une entité LPA (Local Profile Administration) pour la gestion de ces profils. Cette entité LPA réalise l'interface entre l'élément sécurisé (eUICC par exemple) et l'entité de l'opérateur de gestion de profils (par exemple le serveur de gestion des abonnements SM-DP+ « Subscription Manager Data Preparation+ »).

Conformément aux dispositions du GSMA, cette entité LPA est localisée dans le système d'exploitation ou dans l'élément sécurisé du terminal. Cette double possibilité de localisation de l'entité LPA peut entraîner des problématiques liées à la gestion, l'utilisation et à la mise à jour de ladite entité LPA, ainsi que des problématiques liées à la gestion de profils.

Cette entité LPA offre une interface permettant à l'utilisateur du terminal de gérer un profil mémorisé dans un élément sécurisé de son terminal, par exemple pour installer un nouveau profil dans l'élément sécurisé ou pour activer ou désactiver ou supprimer un tel profil.

Aujourd'hui, il est fréquent d'installer des terminaux de communication dans des voitures par exemple, pour offrir par exemple des services de divertissement. Pour les constructeurs de ces voitures, il peut ne pas être souhaitable de laisser la main à l'utilisateur pour la gestion des profils de télécommunication pour accéder à de tels services. Les constructeurs automobiles craignent en particulier d'être sollicités pour assurer le service après-vente pour des problèmes liés à la qualité du service fourni par un opérateur choisi par l'utilisateur de la voiture. Le document EP 3 029 968, 8 juin 2016 (2016-06-08), propose un serveur de provisionnement d'un profil de souscripteur à un réseau de communication mobile comprenant un registre du profil, des moyen de traitement pour initier le provisionnement du profil à un terminal de souscripteur et pour créer une requête de provisionnement et une requête d'activation dudit profil ainsi qu'un moyen d'envoi de la requête de provisionnement et de la requête d'activation au terminal.

Les mécanismes de gestion de profils de communication connus à ce jour ne sont donc pas adaptés à ces nouveaux services.

### Exposé de l'invention

L'invention vise un nouveau mécanisme de gestion de profils de communication.

Ainsi selon un premier aspect, l'invention concerne un dispositif centralisé de gestion de profils de communication, ce dispositif comportant :
- un module de gestion de profils apte à créer dynamiquement une tâche d'exécution pour répondre à un besoin de gestion à distance d'un profil de communication dans un élément sécurisé embarqué dans un terminal ;
ledit module de gestion de profils étant apte à exécuter ladite tâche d'exécution
- un module de communication apte à établir dans un réseau un premier canal de communication entre cette tâche d'exécution et un gestionnaire de profils de communication ;
- cette tâche d'exécution étant apte à obtenir ledit profil de communication du gestionnaire via le premier canal de communication ;
- ce module de communication étant apte à établir une session de communication entre cette tâche d'exécution et un agent de communication configuré pour envoyer à l'élément sécurisé, au moins une commande de gestion de ce profil encapsulée dans au moins un message envoyé par cette tâche d'exécution dans le cadre de cette session ; et
- un module configuré pour supprimer ladite tâche d'exécution lorsqu'une action répondant audit besoin a été réalisée.

Corrélativement, l'invention concerne un procédé de gestion de profils de communication mis en oeuvre par un dispositif centralisé de gestion de profils de communication, ce procédé comportant
- une étape de création dynamique d'une tâche d'exécution (CLPAi) pour répondre à un besoin de gestion à distance d'un profil de communication dans un élément sécurisé embarqué dans un terminal ;
- une étape d'exécution de ladite tâche d'exécution ;
- une étape d'établissement, dans un réseau, d'un premier canal de communication entre cette tâche d'exécution et un gestionnaire de profils de communication ;
- cette tâche d'exécution étant apte à obtenir ledit profil de communication du gestionnaire via le premier canal de communication ;
- une étape d'établissement d'une session de communication entre cette tâche d'exécution et un agent de communication configuré pour envoyer à l'élément sécurisé, au moins une commande de gestion de ce profil encapsulée dans au moins un message envoyé par cette tâche d'exécution dans le cadre de cette session ; et
- une étape de suppression de cette tâche d'exécution lorsqu'une action répondant audit besoin a été réalisée.

Selon un deuxième aspect, l'invention concerne un agent de communication comportant :
- un premier module de communication configuré pour établir une session de communication avec une tâche d'exécution d'un dispositif centralisé de gestion de profils de communication tel que mentionné ci-dessus ; et
- un deuxième module de communication configuré pour envoyer à un élément sécurisé embarqué dans un terminal, au moins une commande de gestion d'un profil encapsulée dans au moins un message reçu de cette tâche d'exécution dans le cadre de cette session.

Corrélativement, l'invention concerne un procédé de communication mis en oeuvre par un agent de communication, ce procédé comportant :
- une étape d'établissement d'une session de communication avec une tâche d'exécution d'un dispositif centralisé de gestion de profils de communication tel que mentionné ci-dessus ;
- une étape d'envoi à un élément sécurisé embarqué dans un terminal, d'au moins une commande de gestion d'un profil encapsulée dans au moins un message reçu de ladite tâche d'exécution dans le cadre de la session.

Ainsi, et d'une façon générale, l'invention propose de déporter les fonctions de gestion de profils de communication dans un dispositif centralisé dans le réseau de communication, ce dispositif étant apte à communiquer avec un agent de communication configuré pour assurer l'interface entre ce dispositif et l'élément sécurisé.

Vu autrement, il peut être considéré que l'invention propose de déporter les fonctions du LPA dans le réseau, l'agent de communication jouant un rôle minimaliste de passerelle entre ce dispositif et l'élément sécurisé.

Lorsque les terminaux sont embarqués dans une automobile, le constructeur automobile peut facilement administrer les profils de communication stockés dans les éléments sécurisés de ces terminaux en interfaçant son système d'information avec le dispositif centralisé de gestion de profils conforme à l'invention.

Au sens de l'invention, et comme de façon connue, une tâche d'exécution est créée dynamiquement pour répondre à un besoin quelconque de gestion d'un profil de l'élément sécurisé eUICC (administration, audit, installation, activation, désactivation, suppression de profils) et supprimée lorsque l'action répondant à ce besoin a été réalisée. Une tâche d'exécution peut par exemple être implémentée sous la forme d'un processus.

Conformément à l'invention, l'agent de communication selon l'invention offre à l'élément sécurisé les mêmes APIs (Application Programming Interfaces) définies par le standard GSMA ; lorsque l'élément sécurisé souhaite utiliser une fonction du LPA il appelle l'API standard, celle-ci envoyant une instruction au dispositif centralisé dans le réseau pour que celui-ci exécute la fonction correspondante de LPA déportée dans le réseau.

L'agent de communication peut être vu comme un proxy. Il peut être intégré ou non dans le terminal comportant l'élément sécurisé. Dans un exemple particulier d'intégration, le proxy (agent de communication) peut être intégré dans l'élément sécurisé, de type, par exemple, eUICC.

L'invention vise aussi un terminal comportant un agent de communication tel que mentionné ci-dessus et un élément sécurisé.

Dans un mode de réalisation de l'invention, l'élément sécurisé est de type eSIM tel que défini par le GSMA ou de type eUICC (embedded UICC).

Dans un mode de réalisation de l'invention, les commandes sont des commandes APDU (Application Protocol Data Unit) définies par le standard ISO 7816.

Selon un mode particulier de réalisation, la tâche d'exécution est configurée pour mettre en oeuvre ou au moins participer à un mécanisme d'authentification mutuelle entre le gestionnaire de profils et l'élément sécurisé. Par exemple, la tâche d'exécution peut initier ce mécanisme d'authentification.

Selon un mode particulier de réalisation du dispositif centralisé de gestion de profils selon l'invention, les commandes sont, par exemple, des commandes pour charger un profil dans l'élément sécurisé et/ou pour activer ou désactiver ou supprimer un profil dans l'élément sécurisé.

Dans un mode particulier de réalisation, le dispositif de gestion de profils selon l'invention est caractérisé en ce que ladite tâche d'exécution est configurée pour communiquer selon un protocole sécurisé avec ledit gestionnaire de profils par l'intermédiaire du premier canal de communication, établit en utilisant un certificat CERT_{SM} partagé entre le gestionnaire de profils et l'élément sécurisé. Dans ce mode particulier de réalisation, les commandes de gestion de profil sont préalablement sécurisées au sein du gestionnaire de profils, par l'utilisation de ce certificat partagé avant leur envoi via le canal de communication sécurisé établi entre le gestionnaire de profils et la tâche d'exécution. Selon un mode particulier de réalisation, la tâche d'exécution CLPAi est en outre configurée pour transmettre les commandes de gestion de profil à l'agent de communication DAG selon un protocole sécurisé dans le cadre de la session SC1, ce protocole sécurisé utilisant un certificat CERT_{SIM} mémorisé dans l'élément sécurisé eUICC. Le fait de mémoriser le certificat dans l'élément sécurisé renforce considérablement la sécurité du procédé de gestion de profils. Ainsi, dans ce mode de réalisation, avant de transmettre une commande de gestion de profils à l'agent de communication, le dispositif centralisé décapsule le message préalablement reçu du gestionnaire de profils et encapsulé avec le certificat CERT_{SM} du gestionnaire de profils et l'encapsule en utilisant le certificat CERT_{SIM} utilisé pour la session de communication SC1.

L'invention permet ainsi deux types de chiffrement : un premier type d'encapsulation des commandes correspondant au premier canal de communication sécurisé établit entre le gestionnaire de profils et la tâche d'exécution CLPAi et un second type d'encapsulation des commandes correspondant au protocole sécurisé de la session de communication SC1. Par type d'encapsulation on entend l'utilisation d'un certificat (par exemple CERT_{SIM}, CERT_{SM}) dédié à la sécurisation d'une communication (messages) entre une première entité et une seconde entité. La sécurité s'en trouve ainsi renforcée.

Dans un autre mode de réalisation particulier, chacun des types de chiffrement utilise un certificat identique.

Dans ce mode de réalisation, l'agent de communication, par exemple son premier module de communication, est configuré pour obtenir un certificat mémorisé dans l'élément sécurisé et/ou pour utiliser ce certificat pour communiquer selon le protocole sécurisé avec le dispositif centralisé de gestion de profils dans le cadre de la session.

L'invention nécessite d'établir une session entre la tâche d'exécution du dispositif centralisé de gestion de profils et l'agent de communication associé à l'élément sécurisé. L'invention propose notamment deux variantes pour établir cette session.

Dans une première variante, qui peut être qualifiée de mode « push » la session est établie à l'initiative du dispositif centralisé de gestion de profil. Lorsque le dispositif centralisé de gestion de profils a des commandes à envoyer à l'élément sécurisé, il envoie un message d'invitation à l'agent de communication pour que celui-ci établisse une session avec le dispositif centralisé de gestion de profils.

Ainsi, selon un mode particulier de réalisation de cette première variante, le dispositif de gestion de profil selon l'invention comporte un module d'établissement de session configuré pour envoyer un message d'invitation destiné à l'agent de communication pour inviter cet agent de communication à établir une session avec le dispositif centralisé de gestion.

Ce message d'invitation est un message, de préférence, signé et/ou chiffré, de type, par exemple, SMS.

Dans une deuxième variante, qui peut être qualifiée de mode « pull », l'agent de communication a la possibilité d'interroger, par exemple régulièrement, le dispositif centralisé de gestion de profils, en initiant directement l'établissement d'une session vers ce dernier, sans nécessiter de réception préalable, par l'agent de communication, d'un message d'invitation pour initier l'établissement de cette session. Dans le cadre de cette session une fois établie, et à l'initiative de l'agent de communication, le dispositif centralisé de gestion de profils peut envoyer à l'élément sécurisé des commandes dès lors que de telles commandes sont disponibles et destinées à l'élément sécurisé.

Selon un mode particulier de cette deuxième variante de réalisation, le dispositif centralisé de gestion de profils selon l'invention comporte un module d'établissement de session configuré pour recevoir des requêtes d'interrogation en provenance de l'agent de communication, le module d'établissement de session étant configuré pour établir une session avec l'agent de communication en réponse à une telle requête.

Selon un mode particulier de réalisation, le dispositif centralisé de gestion de profils comporte un module d'interface apte à recevoir une requête d'administration d'un tiers, par exemple pour :
- charger le profil de communication dans l'élément sécurisé ; ou
- pour activer, désactiver ou supprimer le profil de communication dans l'élément sécurisé.

Cette requête d'administration peut être envoyée par le propriétaire du terminal, par l'utilisateur du terminal ou par une entité de gestion du terminal, par exemple par une entité de gestion d'une flotte de terminaux à laquelle appartient ce terminal.

Dans un mode particulier de réalisation, les procédés sont mis en oeuvre par des programmes d'ordinateur.

Par conséquent, l'invention vise également un programme d'ordinateur sur un support d'enregistrement, ce programme étant susceptible d'être mis en oeuvre dans un dispositif ou plus généralement dans un ordinateur. Ce programme comporte des instructions adaptées à la mise en oeuvre d'un procédé de gestion de profil tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier chargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente un dispositif centralisé de gestion de profils et un agent de communication conformes à un mode particulier de réalisation dans leur environnement ;
[Fig. 2] la figure 2 représente les principales étapes d'un procédé de gestion de profils et d'un procédé de communication conformes à l'invention pour télécharger un profil de communication dans un élément sécurisé ; et
[Fig. 3] la figure 3 représente les principales étapes d'un procédé de gestion de profils et d'un procédé de communication conformes à l'invention pour activer un profil de communication dans un élément sécurisé.

### Description des modes de réalisation

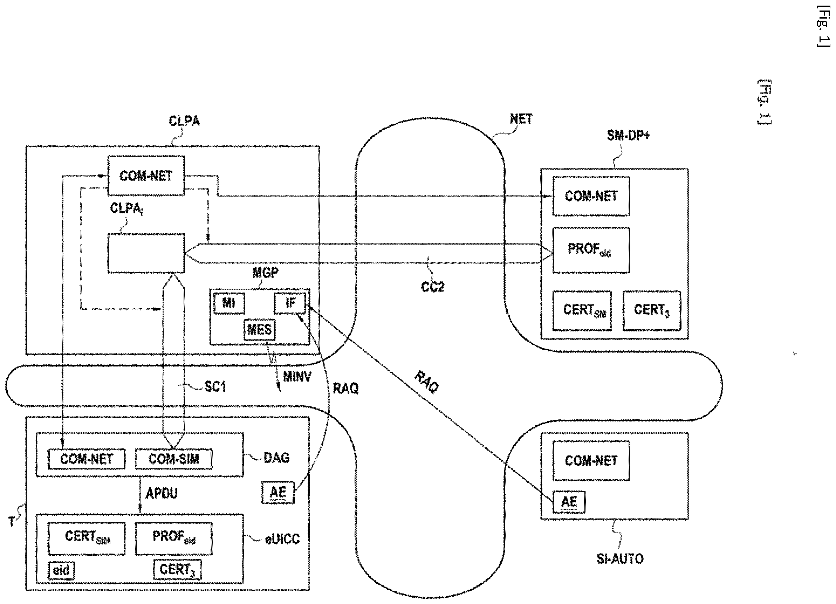

La figure 1 représente, dans leur environnement, un terminal T et un dispositif centralisé CLPA de gestion de profils de communication conformes à des modes particuliers de réalisation de l'invention.

Dans le mode de réalisation décrit ici, le terminal T est embarqué dans une automobile non représentée. Le terminal T est dans cet exemple géré à distance par le système d'information SI-AUTO du constructeur de cette automobile.

Ce terminal T comporte un agent de communication DAG conforme à l'invention et un élément sécurisé eUICC.

L'élément sécurisé eUICC comporte un identifiant unique eid et un certificat cryptographique CERT_{SIM}. L'élément sécurisé peut mémoriser un ou plusieurs profils de communication.

Sur la figure 1 on a également représenté un gestionnaire de profils de communication SM-DP+. Ce gestionnaire de profils SM-DP+ mémorise plusieurs profils dont un profil PROF_{eid} destiné à l'élément sécurisé eUICC du terminal T. Le gestionnaire de profils assure aussi un rôle de sécurisation de profils et un rôle d'attribution respective du profil à l'eUICC à laquelle il est destiné.

Le terminal T, le dispositif centralisé CLPA de gestion de profils, le système d'information SI-AUTO du constructeur automobile et le gestionnaire de profils de communication SM-DP+ communiquent via un réseau NET. Chacun comporte à cet effet un module de communication COM-NET.

Ce réseau NET est par exemple le réseau Internet ou un réseau de téléphonie cellulaire de type 2G, 3G, 4G ou 5G.

Dans le mode de réalisation décrit ici, le dispositif centralisé CLPA de gestion de profils comporte un module de gestion de profils MGP, ce module comportant :
- un sous-module d'interface IF apte à recevoir des requêtes d'administration RAQ, par exemple du propriétaire du terminal T ou du système d'informations SI-AUTO du constructeur automobile ;
- un sous-module MI de gestion de tâches d'exécution apte à créer, exécuter et supprimer une tâche d'exécution CLPAi pour gérer depuis le réseau NET les profils de communication de l'élément sécurisé eUICC ; et
- un sous-module MES d'établissement de session, apte à établir et résilier une session de communication SC1 entre une tâche d'exécution CLPAi et l'agent de communication DAG. Dans le mode de réalisation décrit ici, ces sessions de communication SC1 sont conformes au protocole TLS et utilisent le certificat CERT_{SIM} de l'élément sécurisé eUICC.

Le certificat CERT_{SIM} permet de sécuriser les échanges de la session SC1 entre l'agent de communication DAG et le dispositif centralisé CLPA de gestion de profils.

Dans le mode de réalisation décrit ici, le dispositif centralisé CLPA de gestion de profils est apte à établir un canal de communication CC2 entre une tâche d'exécution CLPAi et le gestionnaire de profils SM-DP+.

Dans le mode de réalisation décrit ici, ce canal de communication CC2 est sécurisé et met en oeuvre le protocole TLS ; il utilise un certificat CERT_{SM} du gestionnaire de profils SM-DP+ pour sécuriser les échanges entre le dispositif centralisé CLPA et le gestionnaire de profils SM-DP+.

Le protocole TLS peut être remplacé par un autre protocole cryptographique.

D'autres certificats que ceux utilisés pour sécuriser le canal de communication CC2 et la session de communication SC1 peuvent en outre être utilisés pour sécuriser les échanges entre le gestionnaire de profils de communication SM-DP+ et l'élément sécurisé eUICC du terminal T.

Comme décrit ultérieurement, le canal de communication sécurisé CC2 peut être utilisé par la tâche d'exécution CLPAi pour télécharger un profil de communication PROF depuis le gestionnaire de profils SM-DP+, par exemple le profil PROF_{eid} destiné à l'élément sécurisé eUICC du terminal T.

Les messages envoyés par la tâche d'exécution CLPAi à l'agent de communication DAG encapsulent des commandes de gestion de profil destinées à l'élément sécurisé eUICC. Dans l'exemple de réalisation décrit ici, ces commandes sont des commandes APDU.

Ces commandes peuvent être notamment :
- une commande APDU pour installer un profil dans l'élément sécurisé eUICC, par exemple le profil PROF_{eid} ;
- une commande APDU pour activer, désactiver ou supprimer un profil installé dans l'élément sécurisé eUICC.

L'agent de communication DAG comporte un module COM-SIM configuré pour envoyer à l'élément sécurisé eUICC les commandes de gestion de profil (par exemple des commandes APDU) encapsulées dans les messages reçus du dispositif CLPA centralisé de gestion de profils de communication.

Les commandes de gestion de profil sont initialement sécurisées au sein du gestionnaire de profils SM-DP+, par l'utilisation d'un certificat CERT₃ partagé entre l'élément sécurisé eUICC et le gestionnaire de profils SM-DP+, avant leur envoi, via le canal de communication sécurisé CC2. Ainsi on assure un double chiffrement permettant d'augmenter la sécurité des commandes.

La transmission des commandes de gestion de profil entre le dispositif centralisé CLPA et l'agent de communication DAG est sécurisée (encapsulation des commandes dans les messages) par l'utilisation du certificat CERT_{SIM} de l'élément sécurisé eUICC. Comme déjà mentionné ci-dessus, les commandes ayant été initialement sécurisées au sein du gestionnaire de profil SM-DP+, par l'utilisation d'un certificat CERT₃, on assure, là encore, dans le cadre de la session SC1 cette fois, un double chiffrement des commandes.

Le canal de communication CC2 permet une encapsulation sécuritaire des commandes de gestion transmises entre le gestionnaire de profils SM-DP+ et le dispositif centralisé CLPA, en utilisant le certificat CERT_{SM} du gestionnaire de profils SM-DP+.

Ainsi, avant de transmettre une commande de gestion de profils à l'agent de communication DAG, le dispositif centralisé CLPA décapsule le message préalablement reçu en provenance du gestionnaire de profils SM-DP+ et encapsulé avec le certificat CERT_{SM}, et l'encapsule en utilisant le certificat CERT_{SIM} utilisé durant la session de communication SC1, assurant ainsi la sécurisation de la transmission entre le dispositif centralisé CLPA et l'agent de communication DAG.

Dans le mode de réalisation décrit ici, une tâche d'exécution CLPAi du dispositif centralisé CLPA est configurée pour mettre en oeuvre ou participer à un mécanisme d'authentification mutuelle entre ledit gestionnaire de profils et l'élément sécurisé.

Le sous-module MES d'établissement de session du dispositif centralisé CLPA est apte à établir et à résilier une session de communication SC1 entre une tâche d'exécution CLPAi et l'agent de communication DAG.

Dans le mode de réalisation décrit ici, ce sous-module MES peut fonctionner selon un mode « pull » et selon un mode « push ».

Dans le mode « push », ce sous-module d'établissement de session MES envoie un message d'invitation destiné à l'agent de communication DAG pour inviter cet agent de communication à établir une session de communication SC1 avec le dispositif CLPA centralisé de gestion.

Plus précisément, dans un mode particulier de réalisation, le système d'informations SI-AUTO envoie une requête d'administration au dispositif CLPA centralisé de gestion de profils. Après réception de la requête par le dispositif centralisé CLPA, le sous-module MES d'établissement de session envoie un message MINV à l'agent de communication DAG associé à l'élément sécurisé eUICC pour l'inviter à établir une session de communication SC1 avec le dispositif centralisé CLPA.

Dans une variante de réalisation du mode PUSH, une requête d'administration est envoyée du terminal au système d'information SI-AUTO. Le système d'information réceptionne cette requête et l'envoi alors au dispositif CLPA centralisé de gestion de profils tel que décrit précédemment.

Dans un autre mode particulier de réalisation, le sous-module d'établissement de session MES envoie directement ce message d'invitation MINV à l'agent de communication DAG, par exemple sous la forme d'un SMS signé et/ou chiffré vérifiable par l'agent DAG.

Dans le mode « pull », le sous-module d'établissement de session MES est configuré pour recevoir des requêtes d'interrogation de l'agent de communication DAG et pour établir une session SC1 avec l'agent de communication en réponse à une telle requête lorsque le dispositif CLPA centralisé de gestion de profils a au moins une commande de gestion de profil à envoyer à l'élément sécurisé eUICC.

Dans le mode de réalisation décrit ici, le sous-module d'interface IF du dispositif CLPA centralisé de gestion de profils est configuré pour recevoir des requêtes d'administration RAQ, par exemple du propriétaire du terminal T ou du système d'informations SI-AUTO du constructeur automobile

En pratique ce sous-module d'interface IF peut communiquer avec une application logicielle du terminal T ou du système d'informations SI-AUTO. Cette application logicielle peut être qualifiée d'agent externe AE. Elle permet de présenter à l'utilisateur les profils du gestionnaire SM-DP+ qui peuvent être téléchargés dans un élément sécurisé eUICC donné. Elle offre aussi un menu permettant à l'utilisateur d'activer, désactiver ou supprimer un profil installé dans un élément sécurisé.

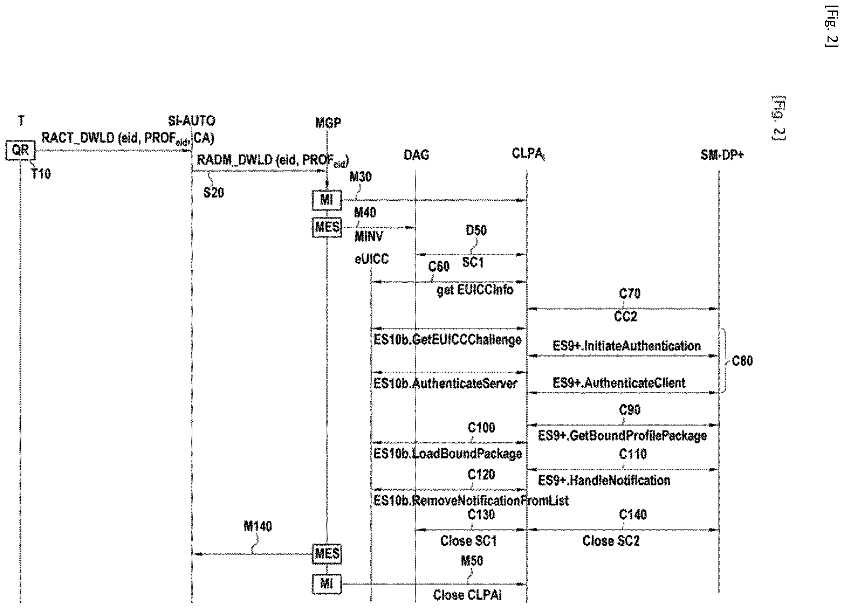

En référence à la figure 2, nous allons maintenant décrire les principales étapes d'un procédé de gestion de profils et les principales étapes d'un procédé de communication conformes à un mode particulier de réalisation de l'invention pour installer un profil dans un élément sécurisé.

On suppose plus précisément qu'un utilisateur souhaite télécharger un nouveau profil PROF_{eid} dans l'élément sécurisé eUICC de son terminal T ; il scanne pour cela (étape T10) un code QR fourni par l'opérateur de télécommunication.

Cette action déclenche l'envoi d'une requête RACT_DWLD de téléchargement de profils vers le système d'informations SI-AUTO du constructeur automobile, cette requête comportant l'identifiant eid de cet élément sécurisé, l'identifiant PROF_{eid} de ce profil et un code d'activation CA, ce code d'activation CA permettant au système d'information SI_AUTO de vérifier la validité de la requête.

Sur réception de cette requête, l'agent externe AE du système d'informations SI-AUTO envoie (étape S20) une requête d'administration RADM_DWLD au module MGP de gestion de profils du dispositif CLPA centralisé de gestion de profils. Dans l'exemple décrit ici, cette requête est la requête downloadProfile(eid) définie dans le document « GSMA SGP.22 RSP Technical Spécification Version 2.2 », ci-après [1].

Le sous-module MI de gestion de tâches d'exécution crée alors (étape M30) une tâche d'exécution CLPAi pour télécharger le profil PROF_{eid} depuis le gestionnaire SM-DP+ vers l'élément sécurisé eUICC.

Le sous-module MES d'établissement de session envoie (étape M40) un SMS signé et/ou chiffré MINV à l'agent de communication DAG associé à l'élément sécurisé eUICC pour l'inviter à établir une session de communication SC1 avec la tâche d'exécution CLPAi.

Une session de communication sécurisée TLS SC1 est établie (étape D50) entre l'agent de communication DAG et la tâche d'exécution CLPAi, cette session utilisant le certificat CERT_{SIM} de l'élément sécurisé eUICC.

Au cours d'une étape C60, la tâche d'exécution CLPAi interroge l'élément sécurisé eUICC pour obtenir les informations devant être fournies au gestionnaire de profil SM-DP+. Dans le mode de réalisation décrit ici, la tâche d'exécution CLPAi utilise la fonction GetEUICCInfo de [1].

Au cours d'une étape C70, la tâche d'exécution CLPAi créé un canal de communication TLS CC2 avec le gestionnaire de profils SM-DP+ en utilisant le certificat CERT_{SM} de ce gestionnaire.

Au cours d'une étape C80, la tâche d'exécution CLPAi met en oeuvre un mécanisme d'authentification mutuelle entre l'élément de sécurité eUICC et le gestionnaire de profils SM-DP+. Dans le mode de réalisation décrit ici, cette étape utilise les fonctions ES10b.GetEUICCChallenge, ES9+.InitiateAuthentication, ES10b.AuthenticateServer et ES9+.AutenticateClient de [1].

Dans un mode de réalisation particulier, non représenté ici, la fonction ES10b.GetEUICCChallenge est effectuée entre l'étape C60 et l'étape C70 et non pas au cours de l'étape C80.

La tâche d'exécution CLPAi télécharge (étape C90) le profil depuis le gestionnaire de profils SP-DP+via le canal de communication TLS CC2. Dans le mode de réalisation décrit ici, elle utilise pour cela la fonctionES9+.GetBoundProfilePackage de [1].

La tâche d'exécution CLPAi envoie (étape C100) à l'agent de communication DAG, via la session TLS SC1 des messages sécurisés par le certificat CERT_{SIM}, ces messages encapsulant des commandes APDU pour installer le profil dans l'élément sécurisé eUICC. Ces commandes APDU sont transmises via le module COM-SIM à l'élément sécurisé eUICC. Dans le mode de réalisation décrit ici, la tâche d'exécution CLPAi utilise la fonction LoadBoundProfilePackage de [1] pour transférer le profil à l'élément sécurisé eUICC.

Si le téléchargement se passe correctement, la tâche d'exécution CLPAi envoie un message de bonne installation ES9+.HandleNotification au gestionnaire de profils SM-DP+ (étape C110) et un message de notification ES10BRemoveNotificationfromList à l'élément sécurisé eUICC (étape C120).

Au cours d'une étape C130, la tâche d'exécution CLPAi termine la session de communication SC1.

Au cours d'une étape C140, la tâche d'exécution met fin au canal de communication CC2 avec le gestionnaire de profil de communication SM-DP+.

Au cours d'une étape M140, le sous-module MES du module de gestion de profils envoie à l'agent externe AE du système d'informations SI-AUTO une information selon laquelle le profil demandé a été téléchargé dans l'élément sécurise eUICC.

Le sous-module MI de gestion de tâches d'exécution termine/supprime (étape M50) la tâche d'exécution CLPAi.

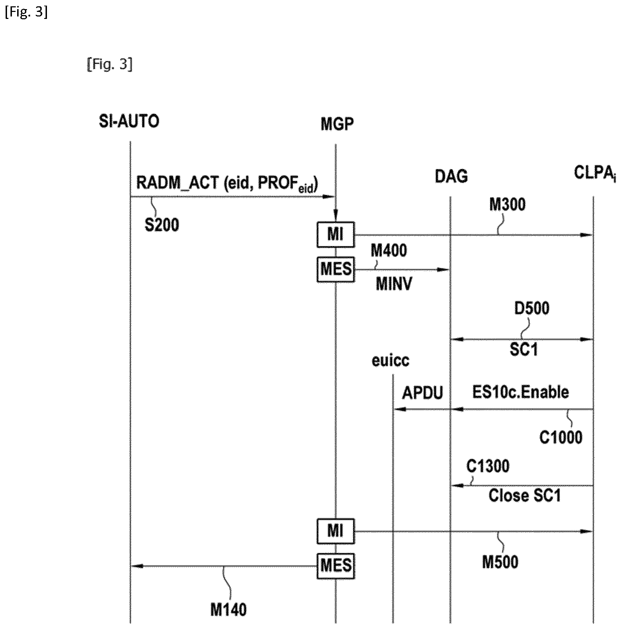

La figure 3 représente les principales étapes d'un procédé de gestion de profils et les principales étapes d'un procédé de communication conformes à un mode particulier de réalisation de l'invention pour activer un profil dans un élément sécurisé.

On suppose plus précisément que le constructeur automobile souhaite activer le profil PROF_{eid} dans l'élément sécurisé eUICC du terminal T.

Il utilise pour cela l'agent externe AE du système d'informations SI-AUTO pour envoyer (étape S200) une requête d'administration RADM_ACT d'activation de profil (eid, PROF_{eid}) au module MGP (plus précisément au sous module d'interface IF) de gestion de profils du dispositif CLPA centralisé de gestion de profils. Dans l'exemple décrit ici, cette requête est la requête enableProfile(eid) de [1].

Le sous-module MI de gestion de tâches d'exécution crée alors (étape M300) une tâche d'exécution CLPAi pour activer le profil PROF_{eid} dans l'élément sécurisé eUICC.

Le sous-module MES d'établissement de session envoie (étape M400) un SMS signé MINV à l'agent de communication DAG associé à l'élément sécurisé eUICC pour l'inviter à établir une session de communication SC1 avec la tâche d'exécution CLPAi.

Une session de communication sécurisée TLS SC1 est établie (étape D500) entre l'agent de communication DAG et la tâche d'exécution CLPAi, cette session utilisant le certificat CERT_{SIM} de l'élément sécurisé eUICC.

La tâche d'exécution CLPAi envoie (étape C1000) à l'agent de communication DAG, via la session TLS SC1 des messages sécurisés par le certificat CERT_{SIM}, ces messages encapsulant des commandes APDU pour activer le profil dans l'élément sécurisé eUICC. Ces commandes APDU sont transmises via le module COM-SIM à l'élément sécurisé eUICC. Dans le mode de réalisation décrit ici, la tâche d'exécution CLPAi utilise la fonction ES10cEnable de [1] pour activer le profil PROF_{eid} dans l'élément sécurisé eUICC.

Si l'activation se passe correctement, la tâche d'exécution CLPAi termine la session de communication SC1 (étape C1300).

Le sous-module MI de gestion de tâches d'exécution termine/supprime (étape M500) la tâche d'exécution CLPAi.

Au cours d'une étape M140, le sous-module MES du module de gestion de profils envoie à l'agent externe AE du système d'informations SI-AUTO une information selon laquelle le profil PROF_{eid} a été activé dans l'élément sécurise eUICC.

## Revendications

1. Dispositif (CLPA) centralisé de gestion de profils de communication, ce dispositif comportant :
- un module de gestion de profils (MGP) apte à créer dynamiquement une tâche d'exécution (CLPAi) pour répondre à un besoin de gestion à distance d'un profil de communication (PROF_{eid}) dans un élément sécurisé (eUICC) embarqué dans un terminal (T)
- ledit module de gestion de profils (MGP) étant apte à exécuter ladite tâche d'exécution (CLPAi) ;
- un module de communication (COM-NET) apte à établir dans un réseau un premier canal de communication (CC2) entre ladite tâche d'exécution (CLPAi) et un gestionnaire (SM-DP+) de profils de communication ;
- ladite tâche d'exécution (CLPAi) étant apte à obtenir ledit profil de communication (PROF_{eid}) dudit gestionnaire (SM-DP+) via ledit premier canal de communication (CC2) ;
- ledit module de communication (COM-NET) étant apte à établir une session de communication (SC1) entre ladite tâche d'exécution (CLPAi) et un agent de communication (DAG) selon la revendication 10 configuré pour envoyer audit élément sécurisé (eUICC), au moins une commande de gestion dudit profil (PROF_{eid}) encapsulée dans au moins un message envoyé par ladite tâche d'exécution (CLPAi) dans le cadre de ladite session (SC1) ; et
- un sous-module (MI) configuré pour supprimer ladite tâche d'exécution (CLPAi) lorsqu'une action répondant audit besoin a été réalisée.

2. Dispositif (CLPA) centralisé de gestion de profils selon la revendication 1, **caractérisé en ce que** ladite tâche d'exécution (CLPAi) est configurée pour mettre en œuvre ou au moins participer à un mécanisme d'authentification mutuelle entre ledit gestionnaire de profils (SM-DP+) et ledit élément sécurisé (eUICC).

3. Dispositif (CLPA) centralisé de gestion de profils selon la revendication 1 ou 2, **caractérisé en ce que** ladite au moins une commande est au moins une commande pour charger ledit profil dans ledit élément sécurisé et/ou pour activer ou désactiver ou supprimer ledit profil dans ledit élément sécurisé (eUICC).

4. Dispositif (CLPA) de gestion de profils selon l'une des revendications 1 à 3 **caractérisé en ce que** ladite tâche d'exécution (CLPAi) est configurée pour communiquer selon un protocole sécurisé avec ledit agent (DAG) dans le cadre de ladite au moins une session (SC1), ledit protocole sécurisé utilisant un certificat (CERT_{SIM}) mémorisé dans ledit élément sécurisé (eUICC).

5. Dispositif (CLPA) de gestion de profils selon l'une des revendications 1 à 3 **caractérisé en ce que** ladite tâche d'exécution (CLPAi) est configurée pour communiquer selon un protocole sécurisé avec ledit gestionnaire de profils (SM-DP+) dans le premier canal de communication (CC2), ledit protocole sécurisé utilisant un certificat (CERT_{SM}) mémorisé dans ledit gestionnaire de profil (SM-DP+).

6. Dispositif (CLPA) de gestion de profil selon l'une quelconque des revendications 1 à 5, **caractérisé en ce qu'**il comporte un module d'établissement de session (MES) configuré pour envoyer un message d'invitation (MINV) destiné audit agent de communication (DAG) pour inviter ledit agent de communication à établir une dite session avec ledit dispositif (CLPA) centralisé de gestion.

7. Dispositif (CLPA) de gestion de profils selon la revendication 6 **caractérisé en ce que** ledit message d'invitation est un message signé et/ou chiffré de type SMS.

8. Dispositif (CLPA) de gestion de profils selon l'une quelconque des revendications 1 à 5, **caractérisé en ce qu'**il comporte un module d'établissement de session (MES) configuré pour recevoir des requêtes d'interrogation en provenance dudit agent de communication (DAG), ledit module (MES) étant configuré pour établir une dite session avec ledit agent de communication en réponse à une dite requête.

9. Dispositif (CLPA) selon la revendication 1 **caractérisé en ce qu'**il comporte un module d'interface (IF) apte à recevoir une requête d'administration d'un tiers pour :
- charger ledit profil de communication (PROF_{eid}) dans ledit élément sécurisé (EUICC) ; ou
- pour activer, désactiver ou supprimer ledit profil de communication (PROF_{eid}) dans ledit élément sécurisé (EUICC).

10. Agent de communication (DAG) comportant :
- un premier module de communication (COM-NET) configuré pour établir une session de communication (SC1) avec une tâche d'exécution (CLPAi) d'un dispositif (CLPA) centralisé de gestion de profils de communication conforme à la revendication 1 ; et
- un deuxième module de communication (COM-SIM) configuré pour envoyer à un élément sécurisé (eUICC) embarqué dans un terminal (T), au moins une commande de gestion d'un profil (PROF_{eid}) encapsulée dans au moins un message reçu de ladite tâche d'exécution (CLPAi) dans le cadre de ladite session.

11. Agent de communication (DAG) selon la revendication 10, **caractérisé en ce qu'**il est configuré pour obtenir un certificat (CERT_{SIM}) mémorisé dans ledit élément sécurisé (eUICC) et/ou pour utiliser ce certificat (CERT_{SIM}) pour communiquer selon un protocole sécurisé avec ledit dispositif centralisé de gestion de profils (CLPA) dans le cadre de ladite session.

12. Terminal (T) comportant un agent de communication (DAG) selon l'une des revendications 10 ou 11 et un élément sécurisé (eUICC).

13. Procédé de gestion de profils de communication mis en oeuvre par un dispositif (CLPA) centralisé de gestion de profils de communication, ce procédé comportant :
- une étape de création dynamique d'une tâche d'exécution (CLPAi) pour répondre à un besoin de gestion à distance d'un profil de communication (PROF_{eid}) dans un élément sécurisé (eUICC) embarqué dans un terminal (T) ;
- une étape d'exécution de ladite tâche d'exécution (CLPAi) ;
- une étape d'établissement, dans un réseau, d'un premier canal de communication (CC2) entre ladite tâche d'exécution (CLPAi) et un gestionnaire (SM-DP+) de profils de communication ;
- ladite tâche d'exécution (CLPAi) étant apte à obtenir ledit profil de communication (PROF_{eid}) dudit gestionnaire (SM-DP+) via ledit premier canal de communication (CC2) ;
- une étape d'établissement d'une session de communication (SC1) entre ladite tâche d'exécution (CLPAi) et un agent de communication (DAG) configuré pour envoyer audit élément sécurisé (eUICC), au moins une commande de gestion dudit profil (PROF_{eid}) encapsulée dans au moins un message envoyé par ladite tâche d'exécution (CLPAi) dans le cadre de ladite session (SC1) ; et
- une étape de suppression de ladite tâche d'exécution (CLPAi) lorsqu'une action répondant audit besoin a été réalisée.

14. Procédé de communication mis en oeuvre par un agent de communication (DAG), ce procédé comportant :
- une étape d'établissement d'une session de communication (SC1) avec une tâche d'exécution (CLPAi) d'un dispositif (CLPA) centralisé de gestion de profils de communication conforme à la revendication 13 ;
- une étape d'envoi à un élément sécurisé (eUICC) embarqué dans un terminal (T), d'au moins une commande de gestion d'un profil (PROF_{eid}) encapsulée dans au moins un message reçu de ladite tâche d'exécution (CLPAi) dans le cadre de ladite session.

15. Programme d'ordinateur comportant des instructions pour l'exécution d'un procédé de gestion de profil selon la revendication 13 lorsque ledit programme est exécuté par un ordinateur (CLPA).

16. Programme d'ordinateur comportant des instructions pour l'exécution d'un procédé de communication selon la revendication 14 lorsque ledit programme est exécuté par un ordinateur (DAG).

## Patentansprüche

1. Zentralisierte Vorrichtung (CLPA) zur Verwaltung von Kommunikationsprofilen,
wobei diese Vorrichtung Folgendes aufweist:
- ein Modul zur Verwaltung von Profilen (MGP), das geeignet ist, dynamisch eine Ausführungsaufgabe (CLPAi) zu erstellen, um einen Bedarf an Fernverwaltung eines Kommunikationsprofils (PROF_{eid}) in einem gesicherten Element (eUICC) zu decken, das in ein Endgerät (T) eingebaut ist
- wobei das Modul zur Verwaltung von Profilen (MGP) geeignet ist, die Ausführungsaufgabe (CLPAi) auszuführen;
- ein Kommunikationsmodul (COM-NET), das geeignet ist, in einem Netzwerk einen ersten Kommunikationskanal (CC2) zwischen der Ausführungsaufgabe (CLPAi) und einem Verwalter (SM-DP+) von Kommunikationsprofilen herzustellen;
- wobei die Ausführungsaufgabe (CLPAi) geeignet ist, das Kommunikationsprofil (PROF_{eid}) vom Verwalter (SM-DP+) über den ersten Kommunikationskanal (CC2) zu beziehen;
- wobei das Kommunikationsmodul (COM-NET) geeignet ist, eine Kommunikationssitzung (SC1) zwischen der Ausführungsaufgabe (CLPAi) und einem Kommunikationsagenten (DAG) nach Anspruch 10 herzustellen, der dazu ausgebildet ist, an das gesicherte Element (eUICC) wenigstens einen Befehl zur Verwaltung des Profils (PROF_{eid}) zu senden, der in wenigstens einer Nachricht gekapselt ist, die von der Ausführungsaufgabe (CLPAi) im Rahmen der Sitzung (SC1) gesendet wird; und
- ein Untermodul (MI), das dazu ausgebildet ist, die Ausführungsaufgabe (CLPAi) zu löschen, wenn eine Aktion, die den Bedarf deckt, durchgeführt wurde.

2. Zentralisierte Vorrichtung (CLPA) zur Verwaltung von Profilen nach Anspruch 1, **dadurch gekennzeichnet, dass** die Ausführungsaufgabe (CLPAi) dazu ausgebildet ist, einen Mechanismus zur gegenseitigen Authentifizierung zwischen dem Verwalter von Profilen (SM-DP+) und dem gesicherten Element (eUICC) umzusetzen oder wenigstens daran teilzunehmen.

3. Zentralisierte Vorrichtung (CLPA) zur Verwaltung von Profilen nach Anspruch 1 oder 2, **dadurch gekennzeichnet, dass** der wenigstens eine Befehl wenigstens ein Befehl zum Laden des Profils in das gesicherte Element und/oder zum Aktivieren oder Deaktivieren oder Löschen des Profils im gesicherten Element (eUICC) ist.

4. Vorrichtung (CLPA) zur Verwaltung von Profilen nach einem der Ansprüche 1 bis 3, **dadurch gekennzeichnet, dass** die Ausführungsaufgabe (CLPAi) dazu ausgebildet ist, gemäß einem gesicherten Protokoll mit dem Agenten (DAG) im Rahmen der wenigstens einen Sitzung (SC1) zu kommunizieren, wobei das gesicherte Protokoll ein Zertifikat (CERT_{SIM}) nutzt, das im gesicherten Element (eUICC) gespeichert ist.

5. Vorrichtung (CLPA) zur Verwaltung von Profilen nach einem der Ansprüche 1 bis 3, **dadurch gekennzeichnet, dass** die Ausführungsaufgabe (CLPAi) dazu ausgebildet ist, gemäß einem gesicherten Protokoll mit dem Verwalter von Profilen (SM-DP+) im ersten Kommunikationskanal (CC2) zu kommunizieren, wobei das gesicherte Protokoll ein Zertifikat (CERT_{SM}) nutzt, das im Profilverwalter (SM-DP+) gespeichert ist.

6. Vorrichtung (CLPA) zur Verwaltung von Profilen nach einem der Ansprüche 1 bis 5, **dadurch gekennzeichnet, dass** sie ein Sitzungsherstellungsmodul (MES) aufweist, das dazu ausgebildet ist, eine Einladungsnachricht (MINV) zu senden, die für den Kommunikationsagenten (DAG) bestimmt ist, um den Kommunikationsagenten einzuladen, eine Sitzung mit der zentralisierten Verwaltungsvorrichtung herzustellen.

7. Vorrichtung (CLPA) zur Verwaltung von Profilen nach Anspruch 6, **dadurch gekennzeichnet, dass** die Einladungsnachricht eine signierte und/oder verschlüsselte Nachricht vom Typ SMS ist.

8. Vorrichtung (CLPA) zur Verwaltung von Profilen nach einem der Ansprüche 1 bis 5, **dadurch gekennzeichnet, dass** sie ein Sitzungsherstellungsmodul (MES) aufweist, das dazu ausgebildet ist, Abfrageanforderungen vom Kommunikationsagenten (DAG) zu empfangen, wobei das Modul (MES) dazu ausgebildet ist, eine Sitzung mit dem Kommunikationsagenten als Antwort auf eine Anforderung herzustellen.

9. Vorrichtung (CLPA) nach Anspruch 1, **dadurch gekennzeichnet, dass** sie ein Schnittstellenmodul (IF) aufweist, das geeignet ist, eine Administrationsanforderung eines Dritten zu empfangen, um:
- das Kommunikationsprofil (PROF_{eid}) in das gesicherte Element (EUICC) zu laden; oder
- um das Kommunikationsprofil (PROF_{eid}) im gesicherten Element (EUICC) zu aktivieren, zu deaktivieren oder zu löschen.

10. Kommunikationsagent (DAG) aufweisend:
- ein erstes Kommunikationsmodul (COM-NET), das dazu ausgebildet ist, eine Kommunikationssitzung (SC1) mit einer Ausführungsaufgabe (CLPAi) einer zentralisierten Vorrichtung (CLPA) zur Verwaltung von Kommunikationsprofilen nach Anspruch 1 herzustellen; und
- ein zweites Kommunikationsmodul (COM-SIM), das dazu ausgebildet ist, an ein gesichertes Element (eUICC), das in ein Endgerät (T) eingebaut ist, wenigstens einen Befehl zur Verwaltung eines Profils (PROF_{eid}) zu senden, der in wenigstens einer Nachricht gekapselt ist, die von der Ausführungsaufgabe (CLPAi) im Rahmen der Sitzung empfangen wird.

11. Kommunikationsagent (DAG) nach Anspruch 10, **dadurch gekennzeichnet, dass** er dazu ausgebildet ist, ein Zertifikat (CERT_{SIM}) zu beziehen, das im gesicherten Element (eUICC) gespeichert ist, und/oder dieses Zertifikat (CERT_{SIM}) zu nutzen, um gemäß einem gesicherten Protokoll mit der zentralisierten Vorrichtung zur Verwaltung von Profilen (CLPA) im Rahmen der Sitzung zu kommunizieren.

12. Endgerät (T) mit einem Kommunikationsagenten (DAG) nach einem der Ansprüche 10 oder 11 und einem gesicherten Element (eUICC).

13. Verfahren zur Verwaltung von Kommunikationsprofilen, das von einer zentralisierten Vorrichtung (CLPA) zur Verwaltung von Kommunikationsprofilen durchgeführt wird, wobei dieses Verfahren Folgendes aufweist:
- einen Schritt des dynamischen Erstellens einer Ausführungsaufgabe (CLPAi), um einen Bedarf an Fernverwaltung eines Kommunikationsprofils (PROF_{eid}) in einem gesicherten Element (eUICC) zu decken, das in ein Endgerät (T) eingebaut ist;
- einen Schritt des Ausführens der Ausführungsaufgabe (CLPAi) ;
- einen Schritt des Herstellens, in einem Netzwerk, eines ersten Kommunikationskanals (CC2) zwischen der Ausführungsaufgabe (CLPAi) und einem Verwalter (SM-DP+) von Kommunikationsprofilen;
- wobei die Ausführungsaufgabe (CLPAi) geeignet ist, das Kommunikationsprofil (PROF_{eid}) vom Verwalter (SM-DP+) über den ersten Kommunikationskanal (CC2) zu beziehen;
- einen Schritt des Herstellens einer Kommunikationssitzung (SC1) zwischen der Ausführungsaufgabe (CLPAi) und einem Kommunikationsagenten (DAG), der dazu ausgebildet ist, an das gesicherte Element (eUICC) wenigstens einen Befehl zur Verwaltung des Profils (PROF_{eid}) zu senden, der in wenigstens einer Nachricht gekapselt ist, die von der Ausführungsaufgabe (CLPAi) im Rahmen der Sitzung (SC1) gesendet wird; und
- einen Schritt des Löschens der Ausführungsaufgabe (CLPAi), wenn eine Aktion, die den Bedarf deckt, durchgeführt wurde.

14. Kommunikationsverfahren, das von einem Kommunikationsagenten (DAG) durchgeführt wird, wobei dieses Verfahren Folgendes aufweist:
- einen Schritt des Herstellens einer Kommunikationssitzung (SC1) mit einer Ausführungsaufgabe (CLPAi) einer zentralisierten Vorrichtung (CLPA) zur Verwaltung von Kommunikationsprofilen nach Anspruch 13;
- einen Schritt des Sendens, an ein gesichertes Element (eUICC), das in ein Endgerät (T) eingebaut ist, wenigstens eines Befehls zur Verwaltung eines Profils (PROF_{eid}), der in wenigstens einer Nachricht gekapselt ist, die von der Ausführungsaufgabe (CLPAi) im Rahmen der Sitzung empfangen wird.

15. Computerprogramm, aufweisend Anweisungen für die Ausführung eines Verfahrens zur Verwaltung von Profilen nach Anspruch 13, wenn das Programm von einem Computer (CLPA) ausgeführt wird.

16. Computerprogramm, aufweisend Anweisungen für die Ausführung eines Kommunikationsverfahrens nach Anspruch 14, wenn das Programm von einem Computer (DAG) ausgeführt wird.

## Claims

1. Centralized device (CLPA) for managing communication profiles, this device comprising:
- a profile-managing module (MGP) able to dynamically create an execution task (CLPAi) to meet a need to remotely manage a communication profile (PROF_{eid}) in a secure element (eUICC) embedded in a terminal (T)
- said profile-managing module (MGP) being able to execute said execution task (CLPAi);
- a communication module (COM-NET) able to set up in a network a first communication channel (CC2) between said execution task (CLPAi) and a communication-profile manager (SM-DP+);
- said execution task (CLPAi) being able to obtain said communication profile (PROF_{eid}) from said manager (SM-DP+) via said first communication channel (CC2);
- said communication module (COM-NET) being able to set up a communication session (SC1) between said execution task (CLPAi) and a communication agent (DAG) according to Claim 10, said communication agent being configured to send, to said secure element (eUICC), at least one management command regarding management of said profile (PROF_{eid}), said management command being encapsulated in at least one message sent by said execution task (CLPAi) in the context of said session (SC1); and
- a sub-module (MI) configured to delete said execution task (CLPAi) when an action meeting said need has been carried out.

2. Centralized profile-managing device (CLPA) according to Claim 1, **characterized in that** said execution task (CLPAi) is configured to implement or at least participate in a mechanism of mutual authentication between said profile manager (SM-DP+) and said secure element (eUICC).

3. Centralized profile-managing device (CLPA) according to Claim 1 or 2, **characterized in that** said at least one command is at least one command to load said profile into said secure element and/or to enable or disable or delete said profile from said secure element (eUICC).

4. Profile-managing device (CLPA) according to one of Claims 1 to 3, **characterized in that** said execution task (CLPAi) is configured to communicate according to a secure protocol with said agent (DAG) in the context of said at least one session (SC1), said secure protocol using a certificate (CERT_{SIM}) stored in said secure element (eUICC).

5. Profile-managing device (CLPA) according to one of Claims 1 to 3, **characterized in that** said execution task (CLPAi) is configured to communicate according to a secure protocol with said profile manager (SM-DP+) in the first communication channel (CC2), said secure protocol using a certificate (CERT_{SM}) stored in said profile manager (SM-DP+).

6. Profile-managing device (CLPA) according to any one of Claims 1 to 5, **characterized in that** it comprises a session-setup module (MES) configured to send an invite message (MINV) to said communication agent (DAG) to invite said communication agent to set up a said session with said centralized managing device (CLPA).

7. Profile-managing device (CLPA) according to Claim 6, **characterized in that** said invite message is a signed and/or encrypted message of SMS type.

8. Profile-managing device (CLPA) according to any one of Claims 1 to 5, **characterized in that** it comprises a session-setup module (MES) configured to receive interrogation requests from said communication agent (DAG), said module (MES) being configured to set up a said session with said communication agent in response to a said request.

9. Device (CLPA) according to Claim 1, **characterized in that** it comprises an interface module (IF) able to receive an administration request from a third party with a view to:
- loading said communication profile (PROF_{eid}) into said secure element (eUICC); or
- to enabling, disabling or deleting said communication profile (PROF_{eid}) from said secure element (eUICC).

10. Communication agent (DAG) comprising:
- a first communication module (COM-NET) configured to set up a communication session (SC1) with an execution task (CLPAi) of a centralized device (CLPA) for managing communication profiles according to Claim 1; and
- a second communication module (COM-SIM) configured to send, to a secure element (eUICC) embedded in a terminal (T), at least one management command regarding management of a profile (PROF_{eid}), said management command being encapsulated in a message received from said execution task (CLPAi) in the context of said session.

11. Communication agent (DAG) according to Claim 10, **characterized in that** it is configured to obtain a certificate (CERT_{SIM}) stored in said secure element (eUICC) and/or to use this certificate (CERT_{SIM}) to communicate according to a secure protocol with said centralized profile-managing device (CLPA) in the context of said session.

12. Terminal (T) comprising a communication agent (DAG) according to either of Claims 10 and 11 and a secure element (eUICC).

13. Method for managing communication profiles, which method is implemented by a centralized device (CLPA) for managing communication profiles, this method comprising:
- a step of dynamically creating an execution task (CLPAi) to meet a need to remotely manage a communication profile (PROF_{eid}) in a secure element (eUICC) embedded in a terminal (T);
- a step of executing said execution task (CLPAi);
- a step of setting up, in a network, a first communication channel (CC2) between said execution task (CLPAi) and a communication-profile manager (SM-DP+);
- said execution task (CLPAi) being able to obtain said communication profile (PROF_{eid}) from said manager (SM-DP+) via said first communication channel (CC2);
- a step of setting up a communication session (SC1) between said execution task (CLPAi) and a communication agent (DAG) that is configured to send, to said secure element (eUICC), at least one management command regarding management of said profile (PROF_{eid}), said management command being encapsulated in at least one message sent by said execution task (CLPAi) in the context of said session (SC1); and
- a step of deleting said execution task (CLPAi) when an action meeting said need has been carried out.

14. Communication method implemented by a communication agent (DAG), this method comprising:
- a step of setting up a communication session (SC1) with an execution task (CLPAi) of a centralized device (CLPA) for managing communication profiles according to Claim 13;
- a step of sending, to a secure element (eUICC) embedded in a terminal (T), at least one management command regarding management of a profile (PROF_{eid}), said management command being encapsulated in at least one message received from said execution task (CLPAi) in the context of said session.

15. Computer program comprising instructions for execution of a profile-managing method according to Claim 13 when said program is executed by a computer (CLPA).

16. Computer program comprising instructions for execution of a communication method according to Claim 14 when said program is executed by a computer (DAG).
